# EUROPÄISCHE PATENTSCHRIFT

(11) **EP 2 368 936 B1**
(45) Veröffentlichungstag und Bekanntmachung des Hinweises auf die Patenterteilung: **11.05.2016**
(21) Anmeldenummer: 11002240.7
(22) Anmeldetag: 18.03.2011
(51) Int. Cl.: C08J 9/00, A47L 13/16

(54) **Schwammtuch mit Netz**
Sponge cloth with mesh
Tissu-éponge doté d'un filet

(30) Priorität: 26.03.2010 DE 102010012878
(43) Veröffentlichungstag der Anmeldung: 28.09.2011
(73) Patentinhaber: Kalle GmbH, 65203 Wiesbaden (DE)
(72) Erfinder: Mans, Leo, Dr., 55120 Mainz (DE); Tüschen, Norbert, Dr., 65201 Wiesbaden (DE)
(74) Vertreter: Plate, Jürgen

(56) Entgegenhaltungen:
- EP-A1- 1 314 390
- EP-A2- 1 600 096
- EP-A2- 1 693 407
- WO-A1-97/42259
- WO-A1-2004/021855
- WO-A1-2005/034711
- WO-A2-2008/119990
- DE-A1- 19 753 546
- NL-A- 7 802 847
- US-A- 3 709 764
- US-A1- 2003 135 181
- US-A1- 2005 136 238

## Beschreibung

Gegenstand der vorliegenden Erfindung ist ein nach dem Viskoseverfahren unter Verwendung von Porenbildner hergestelltes Schwammtuch auf Basis von Cellulose mit einem darin eingebetteten Netz bzw. Gitter, das als mechanische Verstärkung dient. Das Schwammtuch ist geeignet für Putz- und Reinigungszwecke in Haushalt und Industrie.

Die Schwammtuchherstellung nach dem Viskoseverfahren ist seit langem bekannt (s. z.B. DE-PS 1 193 237, DE-OS 26 56 968; DE-OS 27 07 308). Darin wird zunächst Zellstoff, insbesondere Holzzellstoff, mit Natriumhydroxid und Schwefelkohlenstoff in eine alkalische Cellulosexanthogenatlösung, die sogenannte Viskoselösung, übergeführt. Anschließend wird Glaubersalz (Natriumsulfat-Decahydrat) hinzugefügt und gleichmäßig mit der Viskose vermischt. Diese Schwammtuch-Rohmasse wird dann in Form einer Schicht auf ein Endlosband in der jeweils gewünschten Höhe (Dicke) aufgetragen. Die Regenerierung der Cellulose erfolgt in einem erwärmten, alkalischen Koagulationsbad. Sie kann auch in einem sauren Medium, beispielsweise verdünnter Schwefelsäure, durchgeführt werden.

Bei der Herstellung von faserverstärktem Schwammtuch werden in der Regel Baumwollkämmlinge mit verdünnter, NaOH entfettet und mercerisiert. Viskose, Glaubersalz und Baumwollfasern werden dann zu einer homogenen Masse vermischt, allgemein mit Hilfe eines Kneters. Die Fasern haben allgemein eine durchschnittliche Länge im Bereich von 0,5 bis 4,5 cm. Die Schwammtuchmasse wird dann ausgestrichen und regeneriert, wie beschrieben. Nach der Regeneration der Cellulose sind die Fasern in den Schwammtuchkörper eingebunden. Es ist von besonderer Bedeutung, dass die Fasern homogen und dreidimensional verteilt sind. Um das zu erreichen, müssen die Baumwollkämmlinge völlig geöffnet und benetzt sein, ansonsten neigen die Fasern zur Kräuselung und Knotenbildung. Eine gleichmäßige innere Verstärkung ist dann nicht mehr gewährleistet. as Glaubersalz weist einen sehr niedrigen Schmelzpunkt (etwa 32 bis 33 °C) auf. Es wird daher in dem Koagulationsbad aufgeschmolzen und herausgelöst. An Stelle der Salzkristalle bleiben Poren und Hohlräume zurück. Schließlich wird das Schwammtuch ausgewaschen, um es von Salzresten und anhaftenden Reaktionsprodukten zu befreien. Nach dem Trocknen wird es in schmale Bahnen geschnitten, die wiederum aufgerollt werden. Die Rollenware kann dann zu Tüchern der gewünschten Größe konfektioniert werden. Falls gewünscht, kann sie vorher noch bedruckt werden.

Faserverstärkte Schwammtücher sind im trockenen Zustand spröde, bei mechanischer Belastung brechen sie jedoch nicht. Sie werden daher nur in wenigen Ländern in trockener Form in den Handel gebracht. Befeuchtete Schwammtücher sind demgegenüber flexibler und haben einen wesentlichen besseren "Griff'. Um das Schwammtuch feucht zu halten, werden die Schwammtuchbahnen mit einer wäßrigen Lösung eines hygroskopischen Salzes, insbesondere Magnesiumchlorid, imprägniert. Überschüssige Flüssigkeit wird mit Hilfe eines Quetschwalzenpaares entfernt. Die feuchten Tücher werden dann verpackt, normalerweise in einer wasserdampfdichten Folie aus Kunststoff.

Schwammtücher mit Netz sind ebenfalls seit langem bekannt und werden in großem Maßstab produziert. Bei der Herstellung wird eine Schwammtuchmasse, die als wesentliche Bestandteile gelöstes Cellulose-xanthogenat (Viskose) und einen Porenbildner, insbesondere Glaubersalz, enthält, mittels einer Düse in einer dünnen Schicht auf ein Trägerband aufgebracht. Auf diese Bahn wird das Netz bzw. Gitter aufgelegt. Unmittelbar anschließend wird darauf eine weitere Schicht der Schwammtuchmasse aufgebracht. Das Netz bzw. Gitter besteht beispielsweise aus Polyester oder auch aus Baumwolle. Dieses Vorprodukt wird dann durch verschiedene Koagulations-, Regenerations- und Waschbäder geführt, in denen die Cellulose aus dem Cellulose-xanthogenat regeneriert wird. Die Koagulation und Regeneration kann in sauren oder alkalischen Bädern erfolgen. Die Herstellung von Schwammtüchern mit Netz lässt sich einfacher bewerkstelligen als die von faserverstärkten Schwammtüchern, da ein Netz im Gegensatz zu Fasern nicht zum Verknoten neigt.

Schwammtücher mit Netz werden praktisch ausschließlich in vorbefeuchteter Form angebogen. Dazu werden sie mit der bereits genannten wässrigen Magnesiumchlorid-Lösung behandelt und dann mit einer wasserdichten Folienverpackung umgeben. Trockene Schwammtücher mit Netzverstärkung brechen bei mechanischer Belastung jedoch sehr leicht. An der Knickstelle wird das Schwammtuch dann nur noch durch das Netz bzw. Gitter zusammengehalten.

Es stellte sich daher die Aufgabe, die bekannten Schwammtücher mit Netz so zu verbessern, dass sie auch im trockenen Zustand biegestabil sind und die Celluloseschicht nicht mehr bricht. Die Vorteile des Schwammtuches mit Netz, nämlich die einfachere Herstellung, sollen mit denen des faserverstärkten Schwammtuches, nämlich die Knickfestigkeit auch im trockenen Zustand, kombiniert werden. Eine weitere Aufgabe bestand darin, die Abriebfestigkeit der bekannten Schwammtücher mit Netz zu verbessern.

Gefunden wurde nunmehr, dass sich die Aufgabe lösen lässt mit einem Schwammtuch, das ein Netz und zusätzlich kurze Fasern und ein Additiv mit permanent weichmachenden Eigenschaften enthält.

Gegenstand der Erfindung ist demgemäß ein nach dem Viskoseverfahren unter Verwendung von Porenbildnern hergestelltes Schwammtuch auf Basis von Cellulose mit einer Innenverstärkung aus einem Netz bzw. Gitter, das dadurch gekennzeichnet ist, dass die Porenbildner Salzkristalle mit einem mittleren Durchmesser bis zu 2,5 mm sind und weniger als 1/5 der Salzkristalle einen Durchmesser von weniger als 0,3 mm aufweisen und dass zusätzlich in dem Schwammtuch gleichmäßig und dreidimensional verteilt Fasern mit einer durchschnittlichen Länge von 0,1 bis 0,6 cm und permanent weichmachende, mit Wasser nicht auswaschbare Polymere enthalten sind, wobei der Anteil der Fasern 10 bis 40 Gew.% beträgt und der Anteil der weichmachenden, hydrophilen Polymere 2 bis 50 Gew.-%, jeweils bezogen auf das Gewicht der Cellulose.

Es wird angenommen, dass die Fasern und die weichmachenden Polymere die Kristallisationsneigung der regenerierten Cellulose vermindern. Sie wirken praktisch als Störstellen. Die Polymere dürfen keine unerwünschte Koagulation der Viskose bewirken. Sie sollen jedoch eine permanent weichmachende Wirkung besitzen. Auch nach längerem Gebrauch des Schwammtuchs sollen sie noch nicht ausgewaschen sein.

Die in dem erfindungsgemäßen Schwammtuch eingesetzten Fasern können relativ kurz und dick sein, da ein Großteil der mechanischen Verstärkung von dem Netz bzw. Gitter übernommen wird. Die Fasern haben damit eine andere Form und Größe als in den bekannten faserverstärkten Schwammtüchern. Die durchschnittliche Länge beträgt 0,1 bis 0,6 cm, bevorzugt 0,2 bis 0,5 cm. Das Verhältnis von Länge zu Durchmesser beträgt allgemein 50 : 1 bis 3 : 1, bevorzugt 10 : 1 bis 4 : 1. Die Fasern selbst können aus natürlichem und/oder synthetischem Material bestehen. Einsetzbar sind beispielsweise kurze oder kurz geschnittene Baumwollfasern. Kurze und relativ dicke Fasern neigen weniger zum Kräuseln, was die Knotenbildung vermindert. Das heißt, eine Vorbehandlung der Fasern wie Öffnen und Netzen ist in der Regel nicht erforderlich. Das Material der Fasern sollte beim Kontakt mit Wasser die gleichen oder ähnliche Quell- und Schrumpfeigenschaften wie die regenerierte Cellulose aufweisen. Nur dann lässt sich ein Delaminieren des Schwammtuchs sicher vermeiden.

Der Anteil der Fasern beträgt allgemein 10 bis 40 Gew.-%, bevorzugt 15 bis 35 Gew.-%, jeweils bezogen auf das Gewicht der Cellulose.

Die weichmachenden Polymere sind hydrophil, jedoch nicht wasserlöslich, d.h. ihre Wasserlöslichkeit beträgt weniger als 0,1 g in 1 Liter Wasser bei 20 °C. Sie sind dementsprechend praktisch nicht oder nur sehr langsam auswaschbar. Durch den Zusatz der Polymere soll zudem die biologische Abbaubarkeit bzw. Kompostierbarkeit der Schwammtücher nach dem Gebrauch nicht beeinträchtigt sein.

Als besonders geeignete weichmachende Polymere haben sich hydrophile Biopolymere, speziell Oligo- und Polysaccharide sowie Derivate davon erwiesen, beispielsweise Fruktane und Levane, Chitin, Carrageenan. Pektine und Alginate und Derivate davon, beispielsweise Propylenglykol-alginat, daneben auch Celluloseether, wie Carboxyalkylcellulose (beispielsweise Carboxymethylcellulose), Hydroxyalkylcellulase (beispielsweise Hydroxyethyl- oder Hydroxypropyl-cellulose), Alkyl-hydroxyalkyl-cellulose (beispielsweise Methyl-hydroxyethyl-cellulose oder Ethyl-hydroxypropyl-cellulose). Zusätzlich zu den hydrophilen Biopolymeren oder auch anstelle davon sind auch synthetische hydrophile Polymere geeignet, wie Polyvinylpyrrolidon und Copolymere mit Vinylpyrrolidon-Einheiten, Dimethylaminoethyl-methacrylate, Polyacrylsäuren (Carbopole) oder Polymethacrylsäure oder Polylactid. Die Wasserlöslichkeit der hydrophilen Polymere wird gegebenenfalls durch den Einsatz von Vernetzem, wie Glyoxylsäure, auf das erforderliche Maß begrenzt. pie Vernetzer bewirken allgemein eine Verknüpfung der weichmachenden Polymere mit der Cellulose durch kavalente Bindungen.

Durch die genannten Polymere wird die Kristallisationsneigung der regenerierten Cellulose vermindert, das Schwammtuch bekommt einen weicheren "Griff" und bricht auch im trockenen Zustand nicht mehr.

Der Anteil der weichmachenden, hydrophilen Polymere beträgt allgemein 2 bis 50 Gew.-%, bevorzugt 3 bis 30 Gew.%, besonders bevorzugt 5 bis 25 Gew.-%, jeweils bezogen auf das Gewicht der Cellulose.

Durch die Fasern und die weichmachenden Polymere ist nicht nur die mechanische Stabilität und der Zusammenhalt des Schwammtuchs verbessert, auch die Abriebfestigkeit ist überraschend höher als die der bekannten Schwammtücher mit Netz:, wie der Veslic-Test in den nachfolgenden Beisplelen und Vergleichsbeispielen zeigt. Sie halten damit auch länger, was einen erheblichen Gebrauchsvorteil darstellt.

Das Netz bzw. Gitter hat zweckmäßig eine Maschenweite von etwa 2 bis 15 mm, bevorzugt etwa 3 bis 10 mm. Es besteht bevorzugt aus Baumwolle oder Polyester oder anderen synthetischen und/oder natürlichen Materialien. Das Gewicht des Netzes beträgt allgemein etwa 2 bis 100 g/m², bevorzugt 20 bis 80 g/ m², besonders bevorzugt 40 bis 70 g/ m².

Der Porenbildner ist allgemein ein anorganisches, in Wasser leicht lösliches Salz. Besonders bevorzugt sind Salze, die zudem einen niedrigen Schmelzpunkt aufweisen. Zu nennen sind in diesem Zusammenhang Alkali-, Erdalkali- und Ammoniumsalze anorganischer Säuren, insbesondere der Chloride (speziell NaCl und KCl, nicht jedoch MgCl₂), Sulfate (speziell Natrium- und Magnesiumsulfat), Phosphate (speziell Mg₃(PO₃)₂) oder Silikate (speziell Mg₂SiO₄ = Forsterit). Ein besonders bevorzugter Porenbildner ist Glaubersalz (Natriumsulfat-Decahydrat), das einen Schmelzpunkt von 32,4 °C aufweist.

Der mittlere Durchmesser der Salzkristalle beträgt allgemein bis zu 2,5 mm, bevorzugt bis zu 2 mm. Weniger als 1/5 der Salzkristalle sollten einen Durchmesser von weniger als 0,3 mm aufweisen. Liegt der Anteil dieser besonders kleinen Salzkristalle höher, so führt dies zu einem Schwammtuch mit verminderter Wasseraufnahmefähigkeit. Der Porenbildner wird in den Koagulations-, Regenerations- und Waschbädern praktisch vollständig aus dem Schwammtuch herausgelöst. An der Stelle der Salzkristalle bleiben Hohlräume praktisch gleicher Größe zurück.

Der Anteil des Porenbildners beträgt allgemein etwa 30 bis 90 Gew.-%, bevorzugt etwa 75 bis 85 Gew.-%, jeweils bezogen auf das Gesamtgewicht der Schwammtuch-Rohmasse.

Der Zellstoff, aus dem die Viskose für die Herstellung des erfindungsgemäßen Schwammtuchs hergestellt wird, weist bevorzugt einen durchschnittlichen Polymerisationsgrad (DP_{w}) im Bereich von 500 bis 1.600, bevorzugt von 800 bis 1.200, auf. Er wird bevorzugt aus dem Holz von Eukalyptus-Bäumen gewonnen.

Dabei Ist zu berücksichtigen, dass der DP_{w} bei der Viskose-Herstellung abnimmt, d.h, es findet ein Abbau der Cellulose-Ketten statt.

Das Schwammtuch weist keine großen, mit bloßem Auge sichtbaren Poren auf, wie sie für Schwämme typisch sind. Dementsprechend werden bei der Herstellung keine

Treibmittel (beispielsweise Diazo-Verbindungen) hinzugefügt, die unter den Herstellungsbedingungen Gas(e) bilden.

Bei der Herstellung des erfindungsgemäßen Schwammtuchs werden Viskose, Porenbildner sowie Fasern und hydrophile weichmachende Polymere zu einer homogenen Masse vermischt, zweckmäßig in einem Kneter. Die so erhaltene Schwammtuch-Rohmasse wird dann auf einem Trägerband zu einer dünnen Schicht geformt. Das Netz bzw. Gitter wird auf diese Schicht aufgelegt, gefolgt von einer weiteren Schicht aus Schwammtuch-Rohmasse. Das Netz bzw. Gitter ist dann in die Schwammtuchmasse eingebettet. Das Material durchläuft auf dem Band ein erwärmtes - vorzugsweise alkalisches - Koagutations- und Regenerationsbad. Das rohe Schwammtuch wird ausgewaschen, um Salzreste und eventuell noch vorhandene Reaktionsprodukte zu beseitigen.

Das erfindungsgemäße Schwammtuch kann trocken oder vorbefeuchtet sein. Zum Befeuchten wird zweckmäßig eine etwa 2 bis 8 gew.-%ige wässrige Magnesiumchlorid-Lösung eingesetzt, in der gegebenenfalls noch ein Duftstoff-Öl emulgiert sein kann, beispielsweise ein Öl mit Zitronen- oder Kiefem-Duft.

Das erfindungsgemäße Schwammtuch kann nach Methoden, die dem Fachmann allgemein bekannt sind, konfektioniert werden. Dazu zählt beispielsweise ein Bedirucken einer oder beider Oberflächen und das Schneiden in Stücke passender Größe.

Vorgesehen ist das erfindungsgemäße Schwammtuch vor allem als Putz- und Reinigungstuch in Haushalt, Gewerbe und Industrie.

Die nachfolgenden Beispiele dienen zur Illustration der Erfindung. Prozente sind darin als Gewichtsprozente zu verstehen, soweit nicht anders angegeben oder aus dem Zusammenhang unmittelbar ersichtlich.

### Beispiel 1 (Schwammtuch mit Netz und Fasern) (nicht erfindungsgemäß)

510 g Eukalyptuszellstoff (Bahia SP der Firma Bahia Pulp, Brasilien) mit einem durchschnittlichen Polymerisationsgrad DPw von 1400 wurde in 3000 g einer verdünnten (15%igen) wässrigen Natronlauge angemaischt. Die Alkalicellulose wurde mit 250 g CS₂ in das Cellulosexanthogenat übergeführt, welches anschließend durch Lösen mit 1700 g Wasser in Viskose umgewandelt wurde. Zu 300 g dieser Viskose wurden unter Beibehaltung einer Temperatur, die die erforderliche Fluidität gewährleistet, unter Kneten 1500 g Glaubersalz als Porenbildner und 100 g Baumwollfasern mit einer Länge von 5 mm und einem Micronaire von 3,4 in die Mischung gegeben und 3 g blaues Farbpigment zugesetzt.

Die so erhaltene Schwammtuchrohmasse wurde mittels zweier Düsen auf ein Trägerband aufgegeben, wobei nach Austrag einer Unterschicht aus der ersten Düse ein Baumwollnetz mit einer Maschenweite von 10 mm von einer Rolle abgewickelt und aufgebracht wird. Mittels der zweiten Düse wird dann eine Oberschicht aufgebracht, so dass das Netz in der Mitte zu liegen kommt. Das in Rohmasse eingebettete Netz durchläuft anschließend ein heißes alkalisches Koagulationsbad und wurde danach durch eine Säurekufe neutralisiert und in der anschließenden Kufe von anhängenden Salzresten und Reaktionsprodukten befreit.

Das Flächengewicht, des so erhaltenen Schwammtuchs betrug 237 g/m² (absolut trocken. Gewicht bestimmt gemäß DIN 53 854)

### Vergleichsbeispiel 2 (konventionelles Schwammtuch mit Netz, jedoch ohne verteilte Fasern (kommerziell erhältlich von der Spontex S.A.))

Das Flächengewicht, absolut trocken, bestimmt gemäß DIN 53 854, betrug 265 g/m².

### Vergleichsbeispiel 3 (Schwammtuch mit Netz und weichmachenden Polymeren)

Beispiel 1 wurde wiederholt und anstelle der Baumwollfasern wurden in einem separaten Knetprozess 25 g Hydroxyethylcellulose (Tylose H der SE Tylose GmbH & Co. KG) mit der Viskose gemischt. Nach Einkneten der HEC wurde wie unter Beispiel 1 weiter verfahren.

Das Flächengewicht des so erhaltenen Schwammtuchs, absolut trocken, bestimmt gemäß DIN 53 854, betrug 257 g/m².

### Beispiel 4 (Schwammtuch mit Netz, weichmachenden Polymeren und Fasern)

Beispiel 1 wurde wiederholt mit der Abweichung, dass 150 g Baumwollfasern mit einer Länge von 5 mm und 25 g HEC unter Kneten in die Mischung gegeben und homogen verteilt. Anschließend wurde wie im Beispiel 1 beschrieben weiter verfahren.

Das Flächengewicht des so erhaltenen Schwammtuchs, absolut trocken, bestimmt gemäß DIN 53 854, betrug 249 g/m².

### Vergleichsbeispiel 5 (faserverstärktes Schwammtuch ohne Netz (kommerziell erhältlich von der Kalle GmbH))

Das Flächengewicht, absolut trocken, bestimmt gemäß DIN 53 854, betrug 258 g/m².

### Test für Auswaschbarkeit der weichmachenden Polymere

Das Schwammtuch wird 1 min vollständig in eine Wanne mit Wasser eingelegt, mit einer gelochten Platte unter die Wasseroberfläche gedrückt, damit es sich vollständig mit Wasser vollsaugt. Danach wird es mittels eines Quetschwalzenpaares (Spalt ca. 0,2 mm, Anpressdruck 4,5 bar) abgequetscht und die ablaufende Flüssigkeit aufgefangen.

Nach dem Abziehen des Wassers wurde die Menge des ausgewaschenen Polymers gravimetrisch bestimmt.

**Testergebnis**

| | **ausgewogenes Polymer (HEC) mg/m²** |
|---|---|
| Schwammtuch Vergleichsbeispiel 3 | 5 |
| Schwammtuch Beispiel 4 | 3 |

### Test für Knickfestigkeit von trockenem Schwammtuch

Zum Testen der Knickfestigkeit wird das Schwammtuch in der Mitte gefaltet und die beiden Ecken übereinandergelegt. Auf die sich im Tuch ausbildende Falte würde ein Gewicht von 1 kg aufgebracht, so dass die Flächen aufeinander zu liegen kommen. Nach 30 Sekunden wird das Gewicht entfernt, das Schwammtuch um 360 ° zurückgebogen, so dass die beiden Außenseiten aufeinander liegen. Danach wird die Kante wieder mit einem Gewicht von 1 kg beschwert. Dieser Vorgang wird 10 Mal wiederholt. Es wird beobachtet, nach wie viel Faltzyklen eine Beschädigung der Oberfläche auftritt.

Ergebnis Knicktest:

| Schwammtuch gemäß (Vergleichs)Beispiel | Faltzyklen |
|---|---|
| 1 | > 10 |
| 2 | 1 |
| 3 | 6 |
| 4 | >10 |
| 5 | >10 |

Die Eigenschaften der Schwammtücher sind in der nachfolgenden Tabelle zusammengestellt.

| Beispiel bzw. Vergleichsbeispiel | Dicke im feuchten Zustand¹ [mm] | Dicke im trockenen Zustand² [mm] | Wasserauf nahmever mögen⁴ [l/m²] | Veslic-Test (Zahl der Reibtouren) | Abrieb³ [g/m²] |
|---|---|---|---|---|---|
| 1 | 5,0 | 2,1 | 4,24 | 8 | 53 |
| 2 | 5,2 | 2,2 | 4,76 | 26 | 48 |
| 3 | 5,3 | 2,2 | 5,31 | 19 | 45 |
| 4 | 5,1 | 2,1 | 5,15 | 33 | 31 |
| 5 | 5,6 | 2,3 | 6,05 | 91 | 36 |

| | | | | | |
|---|---|---|---|---|---|
| ¹ DIN 53 855, 0,02 N/cm² ² DIN 53 855, 0,2 N/cm² ³ DIN 53 528 ⁴ Die Wasseraufnahmefähigkeit wurde wie folgt bestimmt: | | | | | |

Zunächst wurde eine auf einer Waage stehende Schale 3 cm hoch mit Wasser gefüllt. Ein Drahtnetz wurde horizontal in das Wasser eingelegt, nach 10 Sekunden in horizontaler Position wieder herausgenommen und in dieser Position oberhalb des Wasserspiegels fixiert. Nach 10 Sekunden wird die Waage auf "Null" tariert, wobei der Wasseraustrag durch das Netz dadurch berücksichtigt wurde.

Nun wurde das trockene Schwammtuch auf das Netz gelegt und horizontal mit diesem in das Wasser für 10 Sekunden eingetaucht. Dann wurde das Schwammtuch mit dem Netz in horizontaler Position aus dem Wasser herausgenommen und auf die Ablageposition horizontal aufgehängt.

Nach 15 Sekunden Abtropfzeit wurde die von dem Schwammtuch entnommene Flüssigkeitsmenge aus der Schale auf der Waage abgelesen. Über die Berechnung der Feuchtfläche wird dann die Wasseraufnahme pro Quadratmeter ermittelt.

Diese Methode erlaubt es, die maximal mögliche Wasseraufnahme ohne Verluste durch hydrostatischen Druck (bei vertikaler Messung) zu bestimmen.

## Patentansprüche

1. Nach dem Viskoseverfahren unter Verwendung von Porenbildnern hergestelltes Schwammtuch auf Basis von Cellulose mit einer Innenverstärkung aus einem Netz bzw, Gitter, **dadurch gekennzeichnet, dass** die Porenbildner Salzkristalle mit einem mittleren Durchmesser bis zu 2,5 mm sind und weniger als 1/5 der Salzkristalle einen Durchmesser von weniger als 0,3 mm aufweisen und dass zusätzlich in dern Schwammtuch gleichmäßig und dreidimensional verteilt Fasern mit einer durchschnittlichen Länge von 0,1 bis 0,6 cm und permanent weichmachende, mit Wasser nicht auswaschbare Polymere enthalten sind, wobei der Anteil der Fasern 10 bis 40 Gew.-% beträgt und der Anteil der weichmachenden, hydrophilen Polymere 2 bis 50 Gew.-%, jeweils bezogen auf das Gewicht der Cellulose.

2. Schwammtuch gemäß Anspruch 1, **dadurch gekennzeichnet, dass** die Fasern eine durchschnittliche Länge von 0,2 bis 0,5 cm, aufweisen.

3. Schwammtuch gemäß Anspruch 1 oder 2, **dadurch gekennzeichnet, dass** das Verhältnis von Länge zu Durchmesser der Fasern 50 : 1 bis 3 : 1, bevorzugt 10 : 1 bis 4 : 1, beträgt,

4. Schwammtuch gemäß einem oder mehreren der Ansprüche 1 bis 3, **dadurch gekennzeichnet, dass** der Anteil der Fasern 15 bis 35 Gew.-% beträgt, bezogen auf das Gewicht der Cellulose.

5. Schwammtuch gemäß einem oder mehreren der Ansprüche 1 bis 4, **dadurch gekennzeichnet, dass** die weichmachenden Polymere hydrophile Biopolymere, bevorzugt Oligo- oder Polysaccharide oder Derivate davon, und/oder hydrophile synthetische Polymere, bevorzugt Polyvinylpyrrolidon und Copolymere mit Vinylpyrrolidon-Einheiten, Dimethylaminoethylmethacrylate, Poly(meth)acrylsäure oder Polylactide, sind,

6. Schwammtuch gemäß Anspruch 5, **dadurch gekennzeichnet, dass** die Oligo- oder Polysaccharide oder Derivate davon Glycane und Fruktane sind, besonders bevorzugt Chitin, Chitosan, Carrageenan oder Alginate oder Derivate davon, Pektine oder Celluloseether sind.

7. Schwammtuch gemäß einem oder mehreren der Ansprüche 1 bis 6, **dadurch gekennzeichnet, dass** der Anteil der weichmachenden, hydrophilen Polymere 3 bis 30 Gew.-%, bevorzugt 5 bis 25 Gew.-%, beträgt, jeweils bezogen auf das Gewicht der Cellulose.

8. Schwammtuch gemäß einem oder mehreren der Ansprüche 1 bis 7, **dadurch gekennzeichnet, dass** es befeuchtet ist, bevorzugt mit einer wässrigen Magnesiumchlorid-Lösung.

9. Verfahren zur Herstellung eines Schwammtuches gemäß einem oder mehreren der Ansprüche 1 bis 8, **dadurch gekennzeichnet, dass** es die Schritte
- Vermischen von Viskose, Porenbildner sowie Fasern und hydrophile weichmachende Polymere zu einer homogenen Schwammtuch-Rohmasse vermischt,
- Formen der Schwammtuch-Rohmasse zu einer Schicht,
- Auflegen eines Netzes bzw. Gitters auf die Schicht,
- Aufbringen einer weiteren Schicht aus der Schwammtuch-Rohmasse auf das Netz bzw. Gitter,
- Herauslösen des Porenbildners sowie Koagulieren und Regenerieren der Cellulose aus der Viskose in alkalischen oder sauren Bädern,
- Auswaschen des so erhaltenen Schwammtuches, sowie
- gegebenenfalls Befeuchten des Schwammtuches
umfasst.

## Claims

1. A sponge cloth produced by the viscose process using pore formers, which is based on cellulose and has an internal reinforcement in the form of a net or grid, wherein the pore formers are salt crystals having an average diameter of up to 2.5 mm and less than 1/5 of the salt crystals have a diameter of less than 0.3 mm and in that the sponge cloth additionally contains uniformly and three-dimensionally distributed fibers having an average length of 0.1 to 0.6 cm and permanently softening polymers not water leachable, wherein the proportion of fibers is in the range from 10 % to 40 % by weight and the proportion of softening, hydrophilic polymers is in the range from 2 % to 50 % by weight, all based on the weight of cellulose.

2. The sponge cloth according to claim 1 wherein the fibers have an average length of 0.2 to 0.5 cm.

3. The sponge cloth according to claim 1 or 2 wherein the length to diameter ratio of the fibers is in the range from 50:1 to 3:1 and preferably in the range from 10:1 to 4:1.

4. The sponge cloth according to one or more of claims 1 to 3 wherein the proportion of fibers is in the range from 15 % to 35 % by weight, based on the weight of cellulose.

5. The sponge cloth according to one or more of claims 1 to 4 wherein the softening polymers are hydrophilic biopolymers, preferably oligo- or polysaccharides or derivatives thereof, and/or hydrophilic synthetic polymers, preferably polyvinylpyrrolidone and copolymers comprising vinylpyrrolidone units, dimethylaminoethyl methacrylates, poly(meth)acrylic acid or polylactides.

6. The sponge cloth according to claim 5 wherein the oligo- or polysaccharides or derivatives thereof are glycans and fructans, more preferably chitin, chitosan, carrageenan or alginates or derivatives thereof, pectins or cellulose ethers.

7. The sponge cloth according to one or more of claims 1 to 6 wherein the proportion of softening, hydrophilic polymers is in the range from 3 % to 30 % by weight and preferably in the range from 5 % to 25 % by weight, all based on the weight of cellulose.

8. The sponge cloth according to one or more of claims 1 to 7 being moistened, preferably with an aqueous magnesium chloride solution.

9. A process for producing a sponge cloth according to one or more of claims 1 to 8, comprising the steps of
- mixing viscose, pore former and also fibers and/or hydrophilic softening polymers to form a homogeneous sponge cloth raw material,
- forming the sponge cloth raw material into a layer,
- placing a net or grid on the layer,
- applying a further layer of sponge cloth raw material onto the net or grid,
- dissolving the pore former out and also coagulating and regenerating the cellulose from the viscose in alkaline or acidic baths,
- washing off the sponge cloth thus obtained, and also
- optionally moistening the sponge cloth.

## Revendications

1. Tissu éponge fabriqué selon le procédé de viscose en utilisant des agents porogènes à base de cellulose avec un renfort interne constitué d'un filet ou d'un treillis, **caractérisé en ce que** les agents porogènes sont des cristaux de sels ayant un diamètre moyen jusqu'à 2,5 mm et moins de 1/5ème des cristaux de sels présente un diamètre de moins de 0,3 mm et il y a en outre dans le tissu éponge des fibres réparties de manière uniforme dans les trois dimensions avec une longueur moyenne de 0,1 à 0,6 cm et des polymères plastifiants en permanence non lavables à l'eau, dans lequel la fraction des fibres atteint 10 à 40 % en poids et la fraction des polymères plastifiants hydrophiles 2 à 50 % en poids, respectivement par rapport au poids de la cellulose.

2. Tissu éponge selon la revendication 1, **caractérisé en ce que** les fibres présentent une longueur moyenne de 0,2 à 0,5 cm.

3. Tissu éponge selon la revendication 1 ou la revendication 2, **caractérisé en ce que** le rapport de la longueur au diamètre des fibres atteint 50:1 à 3:1, de préférence 10:1 à 4:1.

4. Tissu éponge selon une ou plusieurs des revendications 1 à 3, **caractérisé en ce que** la fraction des fibres atteint 15 à 35 % en poids par rapport au poids de la cellulose.

5. Tissu éponge selon une ou plusieurs des revendications 1 à 4, **caractérisé en ce que** les polymères plastifiants sont des biopolymères hydrophiles, de préférence des oligo- ou polysaccharides ou leurs dérivés et/ou des polymères synthétiques hydrophiles, de préférence de la polyvinylpyrrolidone et des copolymères avec des unités de vinylpyrrolidone, le méthacrylate de diméthylaminoéthyle, un acide poly(méth)acrylique ou des polylactides.

6. Tissu éponge selon la revendication 5, **caractérisé en ce que** les oligo- ou polysaccharides ou leurs dérivés sont des glycanes et des fructanes, tout particulièrement la chitine, le chitosane, le carrageenane ou des alginates ou des dérivés de ceux-ci, des pectines ou de l'éther de cellulose.

7. Tissu éponge selon une ou plusieurs des revendications 1 à 6, **caractérisé en ce que** la fraction des polymères plastifiants hydrophiles atteint 3 à 30 % en poids, de préférence 5 à 25 % en poids, respectivement par rapport au poids de la cellulose.

8. Tissu éponge selon une ou plusieurs des revendications 1 à 7, **caractérisé en ce qu'**il est humidifié de préférence avec une solution aqueuse de chlorure de magnésium.

9. Procédé de fabrication d'un tissu éponge selon une ou plusieurs des revendications 1 à 8, **caractérisé en ce qu'**il comprend les étapes consistant à :
- mélanger de la viscose, des agents porogènes ainsi que des fibres et des polymères plastifiants hydrophiles pour constituer une masse brute homogène de tissu éponge,
- conformer la masse brute de tissu éponge en couche,
- appliquer un filet ou un treillis sur la couche,
- appliquer une autre couche formée de la masse brute de tissu éponge sur le filet ou le treillis,
- dissoudre l'agent porogène ainsi que coaguler et régénérer la cellulose à partir de la viscose dans des bains alcalins ou acides,
- laver le tissu éponge ainsi obtenu et
- éventuellement humidifier le tissu éponge.
